Europäisches Patentamt

European Patent Office

Office européen des brevets

(11) Publication number: **0 146 659**
**B1**

(12) **EUROPEAN PATENT SPECIFICATION**

(45) Date of publication of patent specification: **30.03.88**

(51) Int. Cl.⁴: **C 03 C 13/04, C 03 B 37/027**

(21) Application number: **83402510.8**

(22) Date of filing: **22.12.83**

(54) **A method for the preparation of synthetic quartz glass suitable as a material of optical fibers.**

(43) Date of publication of application:
**03.07.85 Bulletin 85/27**

(45) Publication of the grant of the patent:
**30.03.88 Bulletin 88/13**

(84) Designated Contracting States:
**DE FR GB**

(56) References cited:
**EP-A-0 086 533**
**DE-A-2 627 821**
**DE-A-3 040 188**

(73) Proprietor: **Shin-Etsu Chemical Co., Ltd.**
**6-1, Ohtemachi 2-chome**
**Chiyoda-ku Tokyo 100 (JP)**

(72) Inventor: **Okamoto, Haruo**
**2-14-45, Goichi**
**Joetsu-shi Niigata-ken (JP)**
Inventor: **Sawada, Katsuya**
**4-15, Sanai-cho**
**Joetsu-shi Niigata-ken (JP)**
Inventor: **Sekigawa, Syohei**
**1022, Oaza Nishifukushima Kubiki-mura**
**Nakakubiki-gun Niigata-ken (JP)**
Inventor: **Endo, Mikio**
**2-1-4-12, Minato-cho**
**Joetsu-shi Niigata-ken (JP)**
Inventor: **Koide, Hiroyuki**
**1610, Nishikamiisobe**
**Annaka-shi Gunma-ken (JP)**

(74) Representative: **Armengaud Ainé, Alain et al**
**Cabinet ARMENGAUD AINE 3 Avenue Bugeaud**
**F-75116 Paris (FR)**

## Description

Background of the Invention

The present invention relates to a method for the preparation of synthetic quartz glass absolutely free from impurities of hydroxy group and chlorine and suitable as a material of optical fibers.

As is well known, most of the optical fibers used in the modern communication technology are made of quartz glass or, in particular, synthetic quartz glass which is a silicon dioxide material derived from a vaporizable silicon compound by vapor phase oxidation. The most widely practiced method for such a vapor phase oxidiation of a silicon compound into silicon dioxide is the flame hydrolysis of silicon tetrachloride in an oxyhydrogen flame because of the high productivity and inexpensiveness although the synthetic quartz glass obtained by this method unavoidably contains considerably large amounts of hydroxy groups and chlorine atoms which adversely affect the light transmission performance of the optical fibers prepared therefrom.

The inclusion of hydroxy groups in the synthetic quartz glass can be avoided in principle by undertaking the oxidation of a silicon compound having no hydrogen atoms in an atmosphere free from hydrogen or any hydrogen-containing compounds, e.g. water. For example, a silicon compound having no hydrogen atoms is oxidatively decomposed in a high frequency plasma generated in a hydrogen-free atmosphere or oxidized in a flame formed by burning of a hydrogen-free burnable gas such as carbon disulfide and carbon monoxide. These oxidation methods of silicon compounds in a hydrogen-free conditon are, however, practically very disadvantageous in one or more respects such as the low productivity, high production costs both for the materials and the energy consumption and toxicity of the burnable gases. Accordingly, the major current of the synthetic quartz glass manufacture is still the flame hydrolysis of a silicon compound in an oxyhydrogen flame. Therefore, great efforts have been directed to develop a method in which the contents of the undesirable impurities, e.g. hydroxy groups and chlorine atoms, can be reduced in the synthetic quartz glass prepared by the method of flame hydrolysis to such an extent that the light transmission performance of the optical fibers prepared therefrom is substantially not affected.

In the flame hydrolysis of a silicon compound, e.g. silicon tetrachloride, into silicon dioxide, vapor of the silicon compound is oxidatively hydrolyzed in an oxyhydrogen flame to deposit silicon dioxide on a substrate as a sintered porous body which is then heated and melted in an inert atmosphere of, for example, helium into a transparent mass of quartz glass. The quartz glass obtained in this manner usually contains from 30 to 150 p.p.m. (parts per million) of hydroxy groups and is not suitable as a material for the preparation of high performance optical fibers.

A method has been proposed for reducing the hydroxy content in the synthetic quartz glass obtained in the above described manner, in which the sintered body of the silicon dioxide deposited on a substrate is, prior to vitrification by melting, subjected to the so-called dehydration treatment in which the hydroxy groups are replaced with halogen atoms by heating the sintered body at 800 to 1000°C in an atmosphere containing a halogenating agent such as chlorine gas, thionyl chloride, sulfuryl chloride and the like. This method is indeed effective to some extent to reduce the hydroxy content in the quartz glass but not free from several problems including the high reactivity and toxicity of the halogenating agent and the addition of the step of the high temperature treatment in the process. Moreover, it is a matter of course that the synthetic quartz glass obtained by this method of halogenating dehydration contains a rather increased amount of halogen or, in particular, chlorine and the optical fibers obtained by spinning such a quartz glass sometimes include bubbles of the chlorine compound so that the light transmission loss of the optical fibers is increased due to the impurity of chlorine in the wavelength region of 600 to 1100 nm used in the optical communication. Moreover, it is known that the impurity of chlorine in the quartz glass-made optical fibers has an effect of decreasing the resistance of the optical fibers against ionizing radiations.

It has been also proposed to use a bromine compound or fluorine compound as the halogenating agent in place of the above mentioned chlorine compounds. Bromine compounds are, however, less effective than chlorine compounds in the activity of dehydration, so that the residual content of the hydroxy groups, in the quartz glass dehydrated by use of a bromine compound may be larger by almost one order, in some cases, than in a quartz glass obtained by use of a chlorine compound as the dehydrating agent under the same operational conditions.

The EP—A—0 086 533 discloses the use of a fluorine-containing hydrocarbon compound in a method for preparing a synthetic quartz glass body by a vapour phase oxidative decomposition of a silicon compound. This prior publication and the DE—A— 3 040 188 suggest the use of $CF_4$ and $CCl_2F_2$ as components of the gaseous phase, for the vapour phase oxidative decomposition of the silicon compound.

However, when a fluorine compound is used as the halogenating dehydration agent, the silicon dioxide per se may be attacked by the fluorine, and the residual fluorine impurity, in the quartz glass, has an effect of decreasing the refractive index of the quartz glass.

It is possible, in principle, to increase the effectiveness of the halogenating dehydration by decreasing the bulk density of the sintered porous body of silicon dioxide. This way is, however, not undertaken practically, since the fragility of the sintered body with low bulk density causes great inconveniences in handling of the body to decrease the productivity of the quartz glass products. Increase in the concentration of the halogenating agent in the atmosphere of halogenating dehydration is of course effective to decrease

2

the hydroxy content in the resultant synthetic quartz glass but necessarily accompanied by the sacrifice in the increased residual content of the halogen impurities in the quartz glass product.

The halogen impurities in the synthetic quartz glass originate of course also in the starting silicon compound containing halogens such as silicon tetrachloride and, in some cases, germanium tetrachloride, boron trichloride and the like halogen-containing dopants used when doping of the quartz glass is desired for controlling the refractive index thereof. Therefore, attempts have been made to replace these halogen-containing compounds with compounds of the respective elements containing no halogen atoms in the molecular structure such as tetramethoxysilane, tetramethoxygermane, trimethyl borate and the like. Such a measure of decreasing the halogen content in the silicon dioxide is, however, not of great significance since all of the hitherto known methods for dehydration, i.e. reduction of the hydroxy content, in the silicon dioxide utilise a halogen-containing compound as the dehydration agent having a possibility of later introduction of halogen impurities.

The above described problem in connection with the impurities of hydroxy groups and halogen atoms is serious not only in the preparation of a solid mass of synthetic quartz glass such as a rod of uniform composition but also in the preparation of a quartz glass rod having a controlled radial distribution of the refractive index by doping as a precursor or preform of optical fibers spun therefrom. Such a quartz glass rod having a controlled radial density gradient of dopants is prepared in several known methods mostly belonging to the chemical vapor deposition (CVD) method in which vapor of a silicon compound containing a controlled amount of dopants is oxidatively decomposed, for example, by flame hydrolysis into silicon dioxide doped with the dopants which is deposited on the inner wall of a quartz glass tube (hereinafter referred to as the MCVD method), on the outer surface of a core rod of quartz glass or on a rotating refractory table to grow a rod-like body of the quartz glass (hereinafter referred to as VAD method). Among the above mentioned methods for the deposition of flame-hydrolyzed silicon dioxide, the most preferred in the preparation of high-quality quartz glass rod as a precursor of optical fibers is the MCVD method in view of the easiness in the control of the dopant distribution and in the relatively small content of hydroxy groups in the resultant silicon dioxide since deposition of silicon dioxide in the other methods is performed in an open space with difficulties in the control of the dopant concentration and, hence, the radial gradient of the refractive index of the resultant glass rod.

The practical procedure for the above mentioned MCVD method in the prior art is as follows. Thus, vapor of silicon tetrachloride as the glass-forming reactant containing a dopant such as germanium tetrachloride, phosphorus oxychloride, boron trichloride and the like as the dopant is introduced into a quartz glass tube at an end thereof together with oxygen gas as the oxidizing agent while the quartz glass tube is heated from outside by use of an oxyhydrogen flame burner or an electric heater which is moved repeatedly in the direction from the vapor inlet to the other end of the quartz glass tube to oxidize the silicon tetrachloride and the dopant inside the tube into doped silicon dioxide which is deposited on the inner wall of the tube in the form of a transparent quartz glass layer followed by melting of the tube to collapse the tube with a hollow space giving a solid quartz glass rod having a controlled radial distribution of the refractive index of the glass.

The above described MCVD method is naturally not free from the problem of a considerably large content of the chlorine impurity in the quartz glass rod or, in particular, the core portion thereof deposited by the method so that the disadvantages due to the chlorine impurity described above are unavoidable also in this case.

Another essential requirement in the MCVD method is the uniformity of the radial gradient of the dopant concentration over the whole length or over the whole cross section of the rod. In this respect, there are somtimes problems of deformation, i.e. bending ot twisting, of the quartz glass tube since the quartz glass tube is under heating from outside up to a temperature approximating the softening point of quartz. This difficulty is increased as the deposition of the soot-like silicon dioxide on the inner wall of the tube proceeds since the decreased heat transfer through the deposited layer of increased thickness on the inner wall must be compensated for by increasing the heat supply from outside which naturally increases the danger of deformation of the tube. When the heat source outside the tube is an oxyhydrogen flame burner, in particular, the flame temperature is usually increased by increasing the proportion of hydrogen supply relative to oxygen so that the velocity of flame propagation is also increased resulting in an increased deformation of the quartz glass tube blown by the oxyhydrogen flame. Once deformation of the quartz glass tube has taken place, uniformity in the deposition of the silicon dioxide on the inner wall of the tube can no longer be expected so that the optical fibers prepared by spinning such a quartz glass rod have inferior performance of light transmission.

## Summary of the Invention

An object of the present invention is therefore to provide a novel and improved method for the preparation of synthetic quartz glass outstandingly free from the impurities of hydroxy groups or, in particular, hydroxy groups and chlorine atoms by the flame hydrolysis in an oxyhydrogen flame or other methods.

In particular, the invention has an object to provide a synthetic quartz glass rod as a precursor of optical fibers having a uniform and controlled radial distribution of dopants by the MCVD method and free from the above mentioned impurities.

Thus, the present invention is related to a method for the preparation of a synthetic quartz glass body substantially free from hydroxy groups by vapor phase oxidative decomposition of a silicon compound, which comprises the steps of:

a) subjecting a gaseous mixture composed of a silicon compound and a fluorine-containing hydrocarbon compound to a combustion in an oxydizing condition to form silicon dioxide which is deposited on the surface of the refractory substrate in the form of a porous sintered body; and,

b) vitrifying the porous sintered body of silicon dioxide into a transparent quartz glass body, characterized in that the fluorine-containing hydrocarbon compound is represented by the general formula $C_aH_bF_cX_d$ in which X is a halogen atom other than fluorine, the suffix a is a positive integer of 1, 2 or 3, the suffix b is zero or a positive integer not larger than 7, the suffix c is a positive integer not larger than 8 and the suffix d is zero or a positive integer not larger than 7, with the proviso that $2a + 2 = b+c+d$, said fluorine-containing hydrocarbon compounds being used in an amount which is sufficient to completely remove the hydroxy groups in the resultant silicon dioxide and which does not significantly decrease the refractive index of the quartz glass, even in the presence of a small amount of fluorine as impurity.

It is of course optional that the gaseous mixture of the organosilicon compound and the fluorine-containing hydrocarbon compound is admixed with a dopant which is a germanium tetrahalide, a boron trihalide, phosphorus oxychloride or phosphine, when a synthetic quartz glass doped with the respective element is desired with an object to modify the refractive index of the quartz glass.

Further, the above method is applicable to the preparation of a quartz glass rod as a precursor of optical fibers having a controlled radical concentration gradient of the dopant by the MCVD method, with deposition of the silicon dioxide on the inner wall of a fused quartz glass tube. In this case, it is possible to .directly obtain decomposition of a transparent layer of the flame-hydrolyzed silicon dioxide so that the subsequent step of melting of the deposited layer into transparent quartz glass can be omitted and, instead, melting of the tube collapse the hollow space inside the tube gives a transparent solid rod of the synthetic quartz glass having the desired radial gradient of the dopant concentration.

Brief Description of the Drawing

FIGURES 1 and 2 each illustrate a multi-nozzle burner used in the inventive method by the top view and an axial cross section.

FIGURES 3 and 4 each schematically illustrate an assembly of the apparatus and the burner used in the inventive method for growing a sintered porous body of silicone dioxide on a substrate rod together with the gas feed lines.

FIGURE 5 is a schematic illustration of the inventive method for the deposition of silicon dioxide on the inner wall of a quartz glass tube.

FIGURES 6a and 6b are each an infrared absorption spectrum of the synthetic quartz glass prepared by the inventive and conventional methods, respectively (see Example 2).

FIGURES 7 and 8 are each a graph showing of the content of hydroxy groups as an impurity in the synthetic quartz glass prepared according to the inventive method as a function of the atomic concentration of fluorine in the gaseous feed (see Examples 4 and 13, respectively).

Detailed Description of the preferred Embodiments

As is mentioned above, the method of the invention is performed essentially by the flame hydrolysis of a gaseous mixture of a silicon compound and a fluorine containing hydrocarbon compound and it has been a quite unexpected discovery that the presence of such a fluorine-containing compound in the silicon compound to be oxidatively decomposed can give a result that the silicon dioxide formed from the silicon compound is absolutely free from hydroxy groups as an undesired impurity, which also leads to the possibility of omitting the conventionally undertaken subsequent dehydration process using a halogen compound as a dehydrating agent and hence obtaining a chlorine-free synthetic quartz glass.

The silicon compound as the starting material of silicon dioxide is not particularly limitative provided that it has vaporizability including silicon tetrachloride, trichlorosilane, methyl trichlorosilane, dimethyl dichlorosilane, tetramethyl silane, trimethoxy silane, tetramethoxy silane, methyl trimethoxy silane, dimethyl dimethoxy silane, methyl triethoxy silane, tetraethoxy silane and the like although it is preferable that the silicon compound has no chlorine atoms, such as the last several ones of the above named silicon compounds, in order to eliminate any possibility of introducing chlorine impurity into the quartz glass. In this regard, the preferred silicon compound is represented by the general formula $R_nSiX_{4-n}$, in which the symbols R and X and the suffix n have the meanings as defined above but with exclusion of halogen atoms from the definition of X.

On the other hand, the fluorinated hydrocarbon compound to be admixed with the silicon compound is represented by the general formula $C_aH_bF_cY_d$, in which the symbol Y and the suffixes a, b, c and d have the meanings as defined above. This compound should be stable at normal storing conditions and capable of forming active species having dehydrating activity at high temperatures and should have a relatively low boiling point in addition to the requirement of good availability in industry. Several examples of suitable fluorinated hydrocarbon compounds are carbon tetrafluoride, trifluoromethane, trifluoro chloromethane, trifluoro bromomethane, trichloro fluoromethane, dichloro difluoromethane, difluoro chloromethane, pentafluoro chloroethane, hexafluoroethane, 1,1,2-trichloro-1,2,2-trifluoroethane, 1,2-dichloro-1,1,2,2-tetrafluoroethane, octafluoropropane and the like. Carbon tetrafluoride, trifluoromethane, hexafluoroethane and the like, i.e. those containing no chlorine or bromine, are preferred when the resultant quartz glass should be free from the impurities of chlorine and bromine.

It should be noted that, although replacement of the above named fluorine-containing hydrocarbon compounds with fluorine gas, hydrogen fluoride or silicon tetrafluoride may have about the same effect, these compounds sometimes exhibit very undesirable effects that corrosion of the walls of the apparatus and ducts takes place in the presence of even a trace amount of moisture in the reaction system to form a corrosive fluoride by the heat radiation of the flame to wear the quartz glass-made burners and the rusts of the metallic parts and the glass dusts thus formed may enter the resultant quartz glass to cause bubble formation so that these compounds other than the fluorinated hydrocarbons should not be used.

The amount of the fluorinated hydrocarbon compound in the gaseous mixture relative to the silicon compound should be sufficient to completely remove the hydroxy groups in the resultant silicon dioxide and usually it is used in an amount to provide from 0.01 to 10% by moles of fluorine atoms based on the silicon atoms in the silicon compound although it should be determined depending on the types of the silicon compound and the fluorine-containing hydrocarbon compound, types and amounts of the dopants, if used, reaction conditions and the like factors. A hydrocarbon compound having a relatively high fluorine content is preferable. For example, 0.033 mole of trifluoromethane or 0.028 mole of carbon tetrafluoride is sufficient per mole of the silicon atoms in the silicon compound. It is noteworthy that the refractive index of the quartz glass is not significantly decreased even by the presence of a small amount of fluorine as an impurity.

When it is desired that the silicon dioxide deposited on a substrate surface by the flame hydrolysis of the gaseous silicon compound is doped with a dopant effective to modify the refractive index of the quartz glass therefrom, the gaseous mixture of the silicon compound and the fluorinated hydrocarbon compound should of course be admixed with one or more of suitable dopants according to desire. The dopants suitable in this case are exemplified by the compounds of germanium and boron represented by the general formulas $GeX_4$ and $BX_3$, in which X is a halogen atom or an alkoxy group, such as germanium tetrachloride and boron trichloride, respectively, phosphorus oxychloride and phosphine or a mixture thereof. It is of course that the possibility of introducing chlorine impurity can be minimized by use of a dopant free of chlorine such as tetramethoxy germane, tetraethoxy germane, tetra-n-propoxy germane, trimethyl borate, triethyl borate, tri-n-propyl borate and the like, of which the methoxy and ethoxy derivatives of germanium and boron are preferred due to the relatively low boiling point or high vapor pressure. It is of course that the amount of the dopant should be determined according to the desired doping level of the resultant quartz glass.

The method of the invention is performed by burning the gaseous mixture composed of the silicon compound, fluorinated hydrocarbon compound and, optionally, dopant in an oxidizing condition, e.g. in an oxyhydrogen flame, in which the silicon compound is flame-hydrolyzed to form silicon dioxide. The oxidizing condition is obtained typically by use of an oxyhydrogen flame but it is optional that the burnable gas is composed of hydrogen, a hydrocarbon gas, e.g. methane, ethane and propane, or a mixture thereof, admixed with oxygen as the combustion-supporting gas. It is also optional that the gaseous mixture containing the silicon compound and/or the burnable gas are diluted with a suitable carrier gas such as nitrogen, argon and helium. It is preferable that a silicon compound having low combustibility is diluted with oxygen while a silicon compound having high combustibility is diluted with an inert gas.

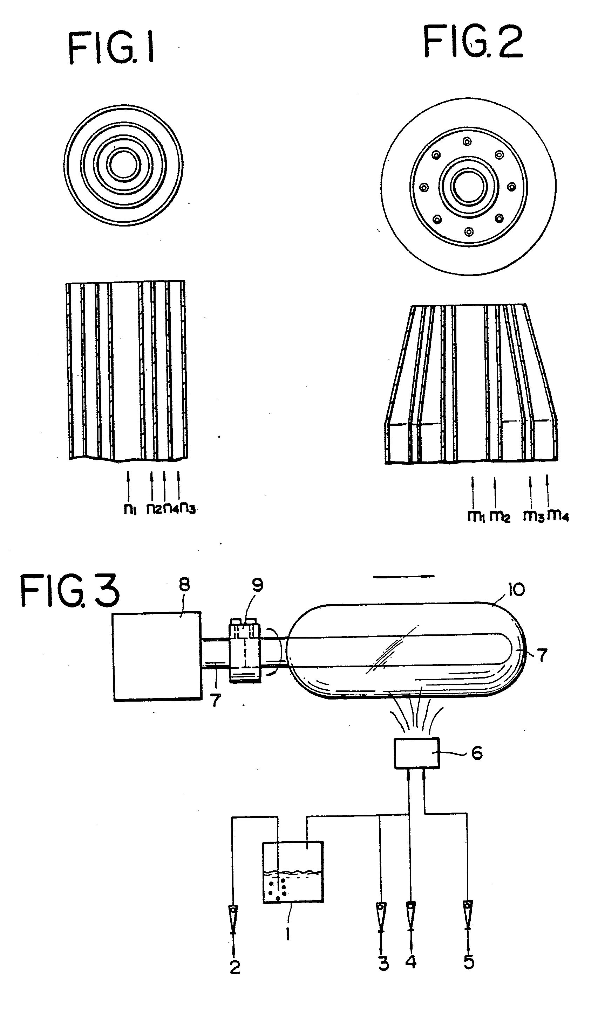

A multi-nozzle burner is used for burning the burnable gas along with the introduction of the gaseous mixture of the silicon compound and the fluorinated hydrocarbon compound. The type of the multi-nozzle burner is not particularly limitative and FIGURES 1 and 2 illustrate some of the examples, of which FIGURE 1 illustrates a burner with coaxial multi-ring nozzles surrounding a center nozzle by the plan view and an axial cross sectional view of the burner and FIGURE 2 illustrates a burner having auxiliary nozzles arranged around the coaxial center and ring nozzles also by the plan view and an axial cross sectional view of the burner.

The silicon compound thus introduced into the oxidizing flame is flame-hydrolyzed therein to form silicon dioxide which is deposited in the form of a sintered porous body on a suitable refractory substrate made of, for example, alumina, carbon or graphite uncoated or coated with silicon carbide, quartz glass and the like. The bulk density of the sintered porous body of silicon dioxide, which can be controlled by modifying the temperature of deposition, should be in the range from 0.1 to 0.9 $g/cm^3$ or, preferably, from 0.3 to 0.7 $g/cm^3$ since a sintered porous body of silicon dioxide having a too small bulk density deposited at a relatively low temperature may be cracked in the course of growing and may exhibit unduly large shrinkage in the vitrification while a sintered porous body having a too large bulk density obtained by deposition of the silicon dioxide at a relatively high temperature is already partially vitrified at portions resulting in portion-wise ruggedness of the surface or inclusion of some bubbles after vitrification. The parameters having influences on the bulk density of the sintered porous body of silicon dioxide are the flame temperature, the combustion rate of the burnable gas and the distance between the burner nozzle and the substrate surface. The thus deposited sintered porous body of silicon dioxide is substantially free from hydroxy groups so that the conventional dehydration treatment subsequently undertaken can be omitted prior to vitrification.

The sintered porous body of silicon dioxide is then vitrified into a body of synthetic fused quartz glass

5

by melting at a temperature of 1400°C or higher in an atmosphere of vacuum or an inert gas such as nitrogen, argon, helium and the like although an atmosphere of nitrogen is less preferred because of the possibility of undesirable formation of nitrides which enter the quartz glass. The temperature of vitrification should be higher when the bulk density of the sintered porous body of silicon dioxide is higher. For example, a sintered body of 150 mm diameter having a bulk density of 0.6 $g/cm^3$ should be heated at 1600°C or higher to attain full vitrification.

When the substrate is made of a synthetic quartz glass formed previously, the deposition of silicon dioxide on the surface thereof followed by vitrification of the porous body gives a solid body of quartz glass while a hollow body of quartz glass can be prepared by use of a substrate body made of alumina or carbon which is removed before or after vitrification or replaced before vitrification with a graphite core having a somewhat smaller dimension than the substrate which is removed after vitrification.

When the above described inventive method is applied to the MCVD method, in particular, an additional advantage is obtained by selecting the silicon compound and the dopant compound from those without chlorine atoms and having calorific values in combustion because burning of these calorific gases inside the quartz glass tube produces a large quantity of heat so that the heat supply from outside the quartz glass tube can be greatly reduced. Assuming that the outer heating means is an oxyhydrogen flame, for example, the rate of hydrogen supply to the flame can be reduced to about one half to one fifth of the conventional rate to form a less intensive flame so that the chance of the deformation of the tube by the excessive heating and blowing is accordingly reduced to a great extent. Therefore, the radial distribution of the dopant concentration can be greatly uniformized contributing to the improvement in the performance of the optical fibers spun therefrom in addition to the advantages obtained by the absence of hydroxy groups and chlorine atoms in the quartz glass precursor.

The procedure of the MCVD method itself according to the invention is not particularly different from the conventional procedures. That is, the gaseous mixture containing the silicon compound, fluorinated hydrocarbon compound and dopant is introduced, as diluted with a carrier gas according to need, into an outwardly heated quartz glass tube and burnt there to undergo the oxidative decomposition of the silicon compound so that the silicon dioxide formed by the reaction and containing the dopant is deposited on the inner wall of the tube. The outer heating means may be an oxyhydrogen flame and the burner therefor is moved reciprocatively along the longitudinal direction of the tube while the tube is continuously rotated around the axis. Alternatively or rather preferably, the burner for the oxyhydrogen flame and the feed nozzle for the gaseous mixture containing the silicon compound are fixed at respective positions and, instead, the quartz glass tube is moved reciprocatively in the longitudinal direction so that the oxidative decomposition of the silicon compound may always take place near the feed nozzle. When the feed gas into the quartz glass tube is burnable or contains a burnable component, care should be taken not to cause the phenomenon of backfire by keeping a sufficiently high rate of introduction of the feed gas since a too low velocity of the feed gas may cause backfire. It is preferable that the feed gas is admixed with oxygen immediately before introduction into the quartz glass tube in order to prevent decrease of the combustion velocity and to achieve complete combustion of the feed gas or complete decomposition of the silicon compound.

The silicon dioxide containing the dopant and deposited on the inner wall of the quartz glass tube in this improved MCVD method is also free from hydroxy groups and may be converted directly into a transparent layer of fused quartz glass having a controlled refractive index by adequately controlling the intensity of the outer heating means which may be an oxyhydrogen burner or an electric heater so that successive continuous or stepwise increase or decrease of the amount of the dopant in the feed gas gives a quartz glass tube having internal layers of deposited quartz glass with radially controlled distribution or gradient of the refractive index.

The thus obtained quartz glass tube having an inner layer with a modified refractive index is then subjected to the step of collapsing to give a solid rod usable as a precursor of optical fibers. This procedure is known in the art and, for example, the tube is heated at about 2000°C to be molten so that the tube is spontaneously collapsed by the aid of the viscosity and surface tension of the molten glass without leaving any hollow space or voids.

In the following, the method of the invention is described in further detail with reference to the accompanying drawing.

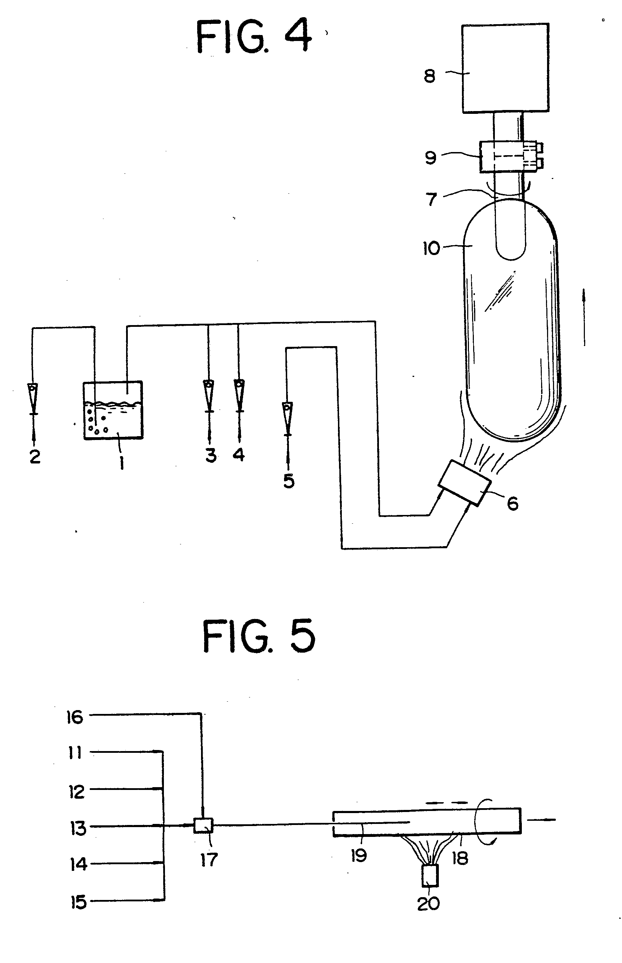

FIGURE 3 illustrates schematically an apparatus under preparation of a hollow body of the quartz glass according to the inventive method, in which the vapor of a vaporizable silicon compound in the vessel 1 is carried by a carrier gas coming from the gas inlet 2 and admixed with oxygen coming from the gas inlet 3 and a fluorinated hydrocarbon compound coming from the gas inlet 4. This gaseous mixture is introduced into the burner 6 together with hydrogen gas coming from the gas inlet 5 and burnt at the nozzle of the burner 6. A rod-like, refractory substrate 7 is held horizontally above the nozzle of the burner 6 as connected to the moving-control unit 8 with a connector 9 in such a manner that the substrate 7 is rotatable around its axis and simultaneously movable in a reciprocative manner along the axial direction. When the silicon compound is flame-hydrolyzed in the oxyhydrogen flame above the burner nozzle, the silicon dioxide formed from the silicon compound is deposited on the rotating and reciprocatively moving substrate rod to form a sintered porous body 10 which contains no hydroxy groups by virtue of the fluorinated hydrocarbon compound admixed with the silicon compound. Therefore, melting of this porous sintered body 10 gives a transparent quartz glass body having no hydroxy groups even by the omission of the subsequent dehydration process undertaken conventionally. A hollow quartz glass body is obtained by pulling away the substrate 7 after vitrification of the sintered body 10. This process of melting of the porous sintered body of silicon dioxide into a transparent quatz glass body is well known in the art and not described here in detail.

FIGURE 4 schematically illustrates another arrangement of the apparatus under preparation of a solid body of quartz glass according to the inventive method, in which the gas feed lines to the burner 6 is the same as in FIGURE 3 except that the burner 6 is not directed upwardly but is somewhat inclined. The refractory substrate 7 in this case is held vertically by the moving control unit 8 through the connector 9 in a rotatable manner around its axis. Instead of the reciprocative movement up and down, the substrate 7 is gradually pulled up as the porous sintered body 10 of silicon dioxide grows. That is, the lower end of the substrate 7 is positioned near the burner nozzle at the start of the silicon dioxide deposition and the velocity of pulling up of the substrate 7 is synchronized with the growth of the sintered body 10 so as to have the lower end of the growing body 10 located always near the burner nozzle. It is of course optional that the substrate rod is held horizontally as in FIGURE 1 so that the growth of the porous sintered body of silicon dioxide proceeds in the horizontal direction. It is of course optional that two or more of burners are jointly used as directed at different angles.

The multi-nozzle burner suitable for use in the inventive method is illustrated in FIGURES 1 and 2. FIGURE 1 illustrates a burner with a first to a third coaxial multiring nozzles $n_2$, $n_4$ and $n_3$ surrounding the center nozzle $n_1$. The vapor mixture of the silicon compound and the fluorinated hydrocarbon compound, optionally, with admixture of a dopant is introduced into the center nozzle $n_1$ while oxygen gas is supplied to the ring nozzles $n_2$ and $n_3$ and the ring nozzle $n_4$ is used for supplying a burnable gas such as hydrogen or a hydrocarbon gas. The multi-nozzle burner illustrated in FIGURE 2 has a center nozzle $m_1$, two coaxial ring nozzles $m_2$ and $m_4$ surrounding the center nozzle $m_1$ and a plurality of auxiliary nozzles $m_3$ positioned within the space of the outer ring nozzle $m_4$ in a radially uniform distribution. The gaseous feed into the centre nozzle $m_1$ may be the same as into the center nozzle $n_1$ in FIGURE 1 and oxygen is supplied to the inner ring nozzle $m_2$ and auxiliary nozzles $m_3$ while the burnable gas is introduced into the outer ring nozzle $m_4$. The fluorinated hydrocarbon gas may not be necessarily mixed with the silicon compound but may be introduced as mixed with one of the other line gases.

When two burners are used jointly in the substrate disposition shown in FIGURE 4, one just below the substrate rod for the formation of the core portion and the other at an inclined or horizontal direction for the formation of the clad portion, with the flames therefrom interfering or not interfering with each other, a quartz glass rod of the so-called graded-index type or step-index type distribution of the refractive index can be prepared as a precursor of optical fibers.

In the next place, application of the inventive method to the MCVD process is described. FIGURE 5 illustrates the gas line system and a quartz glass tube under MCVD process as heated from outside by use of a burner. The gas inlets 11, 12, 13, 14 and 15 are for the introduction of the vaporized silicon compound, germanium compound as a dopant, boron compound as a dopant, phosphorus compound as a dopant and fluorinated hydrocarbon compound, respectively, and these gases are mixed together in a desired proportion and further mixed with oxygen gas coming from the gas inlet 16 at a mixer 17 before introduction into a quartz glass tube 18 out of an injection nozzle 19 while the quartz glass tube 18 under continuous rotation around its axis is heated from outside with an oxyhydrogen burner 20 so that the silicon compound in the gaseous feed introduced into the quartz glass tube 18 is oxidatively decomposed as it is ejected from the ejection nozzle 19 to form silicon dioxide doped with the dopant or dopants to be deposited on the inner wall of the rotating quartz glass tube 18. When the rotating quartz glass tube 18 is moved gradually in the axial direction as the silicon dioxide is deposited on the inner wall thereof with the ejection nozzle 19 and the outer oxyhydrogen burner 20 kept at fixed positions, the deposition of the silicon dioxide proceeds from one end to the other of the tube 18 to form a uniform layer. When the intensity of the outer heating means, e.g. the oxyhydrogen burner 20, is adequately controlled, the depositon of the silicon dioxide on the inner wall of the tube 18 is immediately melted and vitrified as it is deposited so that the inner wall of the tube 18 is provided with an increment of the wall thickness formed of the doped quartz glass. It is preferable that this horizontal movement of the tube 18 is performed in such a manner that, when the deposition of a thin layer of the silicon dioxide has come to an end of the tube starting from the other end, the tube 18 is immediately and rapidly returned to the starting position followed by a second movement of the tube in the same directions as in the first deposition of silicon dioxide so that the second deposition of the silicon dioxide takes place starting from the same beginning end of the tube 18 as in the first deposition. As the above described unsymmetrically reciprocative movement of the quartz glass tube 18 is repeated, the wall of the tube 18 grows inwardly to increase the thickness with narrowing of the hollow space along the axis. It is of course that the doping level of the gaseous feed from the ejection nozzle 19 is controlled so that the wall of the thus inwardly growing layer on the inner wall of the quartz glass tube 18 has a desired gradient or distribution of the dopant concentration and, hence, refractive index in the radial direction. When the wall of the quartz glass tube 18 has attained a desired thickness by the inward growth with successive deposition of the doped silicon dioxide and simultaneous vitrification thereof, the feed of the gas is interrupted and the tube is subjected to the treatment of collapsing into a solid quartz glass rod usuable as a precursor of optical fibers absolutely free from hydroxy groups and, when no chlorine-containing compound is included in the feed gases, chlorine atoms as the undesirable impurities which badly affects the light transmission performance of the optical fibers.

In the following, examples are given to illustrate the inventive method in more detail but not to limit the scope of the invention in any way.

### Example 1

The arrangement of the apparatus was as illustrated in FIGURE 3 with a graphite rod of 30 mm diameter as the substrate held horizontally and multi-nozzle burner illustrated in FIGURE 2 was used with the nozzle opening at a distance of 450 mm from the substrate. Into the burner were introduced vapor of tetramethoxy silane, trifluoromethane, hydrogen as a fuel gas, oxygen and nitrogen as a carrier gas at rates of 726 g/hour (4.78 moles/hour), 4.0 N liters/hour (0.18 mole/hour), 700 N liters/hour, 700 N liters/hour and 20 N liters/hour, respectively, and the gases were burnt at the burner nozzle to oxidatively decompose the silicon compound with formation of silicon dioxide which was deposited on the surface of a graphite rod as the substrate having a diameter of 30 mm over a period of 8 hours. In this case, the graphite substrate was moved reciprocatively in the axial direction with continuous rotation so that the layer of the deposited silicon dioxide was grown to form a sintered porous body having an outer diameter of 79 mm and a length of 450 mm which weighed 1170 g and had a bulk density of 0.615 g/cm$^3$.

In the next place, this sintered porous body of silicon dioxide on the graphite substrate was put into a vacuum furnace and vitrified by heating and melting in an atmosphere of helium gas under atmospheric pressure at 1530°C followed by removal of the graphite substrate. The thus obtained synthetic fused quartz glass tube has an outer diameter of 50.3 mm, inner diameter of 30 mm and length of 410 mm. This synthetic quartz glass has a refractive index of 1.4585 and contained substantially no hydroxy groups.

### Example 2.

Into a burner having a nozzle illustrated in FIGURE 2 and placed at a distance of 450 mm between the burner nozzle and the substrate rod of synthetic quartz glass mounted on an apparatus illustrated in FIGURE 4 were supplied and burnt 600 g/hour (4.41 moles/hour) of methyl trimethoxysilane, 3.1 N liters/hour (0.14 mole/hour) of trifluoromethane, 700 N liters/hour of hydrogen gas as a fuel, 700 N liters/hour of oxygen gas and 20 N liters/hour of nitrogen as a carrier.

As the silicon dioxide was deposited on the lower end of the substrate rod to form a sintered body of silicon dioxide, the substrate rod was gradually pulled up so that the growing end of the silicon dioxide body was always at about 450 mm apart from the burner nozzle for a period of 6 hours. The resultant sintered porous silicon dioxide body weighing 834 g and having dimensions of 80 mm diameter and 260 mm length had a bulk density of 0.64 g/cm$^3$.

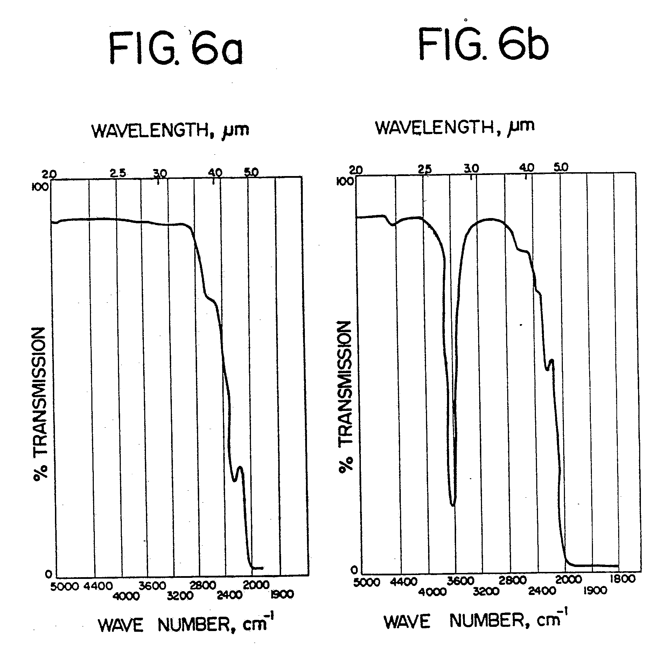

The thus obtained sintered porous body of silicon dioxide was heated and melted at 1550°C under atmospheric pressure of helium gas in a furnace into a quartz glass rod of 46 mm diameter and 230 mm length weighing 830 g. The refractive index of this synthetic quartz glass was 1.4586 and the infrared absorption spectrometric analysis thereof indicated substantially no hydroxy groups contained therein. The infrared absorption spectrum of this synthetic quartz glass is shown in FIGURE 6a in which no absorption band assigned to hydroxy groups was found at a wavelength of about 2.75 μm.

For comparison, the same experimental procedure as above was repeated excepting the omission of trifluoromethane in the feed gas. The sintered porous body of silicon dioxide as grown has a weight of 863 g, bulk density of 0.695 g/cm$^3$, diameter of 88 mm and length of 204 mm. Heating and melting of this sintered body gave a synthetic quartz glass rod having a weight of 858 g, diameter of 53 mm and length of 117 mm. The recfractive index of this quartz glass rod was 1.4587 and the analysis thereof indicated 105 p.p.m. of hydroxy groups contained therein. The sharp absorption band at a wavelength of about 2.75 μm in the infrared absorption spectrum of this synthetic quartz glass shown in FIGURE 6b also evidenced the presence of at least 100 p.p.m. of hydroxy groups.

### Example 3.

The experimental procedure was about the same as in the preceding example except that the gaseous feed was composed of 750 g/hour (4.41 moles/hour) of silicon tetrachloride, 3.4 N liters/hour (0.15 mole/hour) of trifluoromethane, 1000 N liters/hour of hydrogen gas as a fuel, 400 N liters/hour of oxygen gas and 400 N liters/hour of nitrogen gas as a carrier. The sintered porous silicon dioxide body obtained after 8 hours of running had a weight of 1230 g, bulk density of 0.533 g/cm$^3$, diameter of 105 mm and length of 257 mm. Subsequent heating and melting of this porous sintered body in the same manner as in the preceding example gave a synthetic quartz glass rod having a weight of 1215 g, diameter of 62 mm and length of 183 mm. The refractive index of this synthetic quartz glass was 1.4585 and analysis thereof indicated substantial absence of hydroxy groups contained therein.

For comparison, about the same experimental procedure as above was repeated excepting the omission of the trifluoromethane in the gaseous feed. The sintered porous body of silicon dioxide as grown had a weight of 1410 g, bulk density of 0.632 g/cm$^3$, diameter of 58 mm and length of 243 mm. Subsequent heating and melting of this porous body in the same manner as above gave a synthetic quartz glass rod having a weight of 1403 g, diameter of 58 mm and length of 243 mm. The content of hydroxy groups in this comparative synthetic quartz glass was 125 p.p.m.

## Example 4

The experimental procedure was about the same as in the preceding example except that the substrate rod was held horizontally and the silicon compound, which was methyl trimethoxysilane and silicon tetrachloride in this case, was combined with either trifluoromethane or carbon tetrafluoroide in varied proportions.

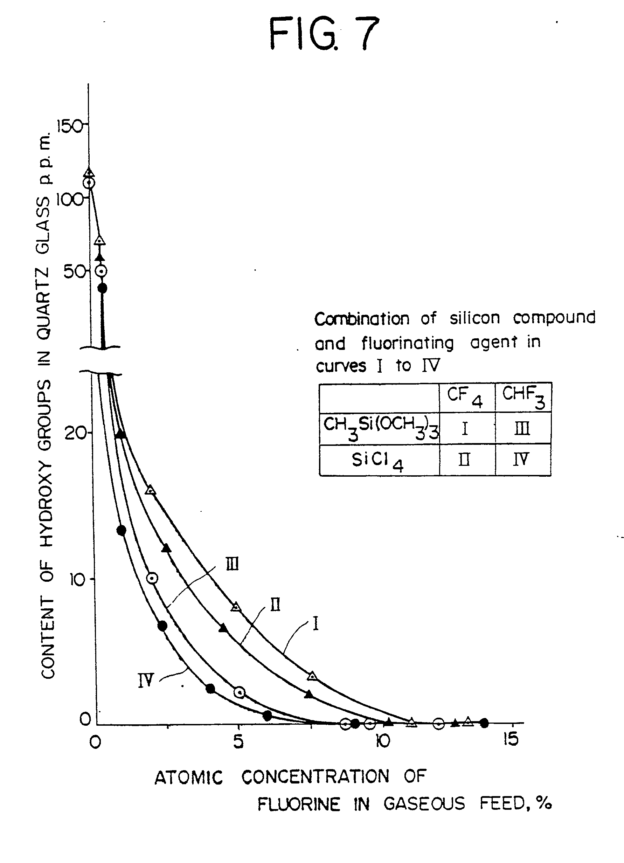

The results obtained by the analysis of the resultant synthetic quartz glass rods for the content of hydroxy groups are graphically shown in Figure 7 as a function of the atomic concentration or molar percentage of fluorine atoms in the gaseous feed based on the total amount of the fluorine and silicon atoms, i.e. F/(F + Si) multiplied by 100.

## Example 5

The same experimental apparatus as used in Example 3 was used except that the burner had a nozzle illustrated in Figure 1, to which were supplied 600 g/hour of methyl trimethoxysilane, 2 N liters/hour of a fluorinated hydrocarbon compound which was either one of trifluoromethane, carbon tetrafluoride, hexafluoroethane and octafluoropropane, 300 N liters/hour of hydrogen gas, 75 N liters/hour of methane, 520 to 650 N liters/hour of oxygen gas corresponding to 50 to 70% of the stoichiometric amount for the complete combustion and the reaction was continued for 5 hours. The thus obtained sintered porous bodies of silicon dioxide had bulk densities of 0.411 to 0.445 g/cm$^3$. Each of the silicon dioxide sintered bodies was heated and melted in an atmosphere of helium under a pressure of 0.2 atmosphere at 1500 to 1510°C to give a synthetic quartz glass rod, of which the refractive index and the content of hydroxy groups were determined. Each of them contained substantially no hydroxy groups.

Table 1 below summarizes the F/(F + Si) molar ratio in the gaseous feed, feed rate of oxygen gas, weight, yield, bulk density, diameter and length of the sintered porous body of silicon dioxide, temperature in the vitrification treatment of the sintered body, and weight and refractive index of the vitrified synthetic quartz glass rod for each of the fluorinated hydrocarbon compounds.

## Example 6

The experimental procedure was about the same as in the preceding example but the methyl trimethoxysilane was replaced with silicon tetrachloride and the fluorinated hydrocarbon compound was either one of trifluoromethane, trifluoro chloromethane, difluoro dichloromethane and trifluoro bromomethane. The feed rates of the gaseous components other than the silicon tetrachloride were: 2.5 N liters/hour of the fluorinated hydrocarbon compound, 400 N liters/hour of hydrogen gas, 100 N liters/hour of methane and 260 N liters/hour of oxygen gas. The F/(F + Si) molar ratio, i.e. the atomic concentration of fluorine, and the results of the experiments are shown in Table 2 below for each of the fluorinated hydrocarbon compounds in a similar manner to Table 1. Each of the resultant synthetic quartz glass rods contained substantially no hydroxy groups.

TABLE 1

| Fluorinated hydrocarbon compound | | $CHF_3$ | $CF_4$ | $C_2F_6$ | $C_3F_8$ |
|---|---|---|---|---|---|
| Gaseous feed | F/(F + Si) molar ratio, % | 5.8 | 7.5 | 10.9 | 13.9 |
| | Feed rate of oxygen, N liters/hour | 520 | 580 | 610 | 650 |
| Sintered body of silicon dioxide | Weight, g | 959 | 1023 | 1011 | 1019 |
| | Yield of $SiO_2$, % | 72.5 | 77.3 | 76.4 | 77.0 |
| | Bulk density, g/cm$^3$ | 0.445 | 0.420 | 0.413 | 0.411 |
| | Diameter, mm | 85 | 88 | 90 | 91 |
| | Length, mm | 380 | 400 | 385 | 380 |
| Temperature of vitrification, °C | | 1510 | 1500 | 1505 | 1510 |
| Quartz glass rod | Weight, g | 953 | 1020 | 1007 | 1013 |
| | Refractive index, $n_D$ | 1.4584 | 1.4585 | 1.4584 | 1.4583 |

TABLE 2

| Fluorinated hydrocarbon compound | | CHF$_3$ | CF$_3$Cl | CF$_2$Cl$_2$ | CF$_3$Br |
|---|---|---|---|---|---|
| F/(F + Si) molar ratio in feed, % | | 7.0 | 7.0 | 4.8 | 7.0 |
| Sintered body of silicon dioxide | Weight, g | 983 | 1030 | 1025 | 1028 |
| | Yield of SiO$_2$, % | 74.3 | 78.0 | 77.5 | 77.7 |
| | Bulk density, g/cm$^3$ | 0.483 | 0.495 | 0.422 | 0.467 |
| | Diameter, mm | 87 | 84 | 91 | 93 |
| | Length, mm | 340 | 335 | 375 | 325 |
| Temperature of vitrification, °C | | 1510 | 1515 | 1520 | 1515 |
| Quartz glass rod | Weight, g | 980 | 1026 | 1020 | 1023 |
| | Refractive index, n$_D$ | 1.4583 | 1.4584 | 1.4583 | 1.4585 |

Example 7

Two burners of multi-ring nozzle type were used in this case, of which one was positioned just below the vertically.held quartz glass substrate to serve as a core-forming burner by blowing the flame vertically upwardly and the other was directed to the substrate at a biased angle from below to serve as a cladding burner. The component gases in each of the nozzles in these two burners and the rate of supply thereof were: a mixture of silicon tetrachloride, germanium tetrachloride, phosphorus oxychloride, oxygen and trifluoromethane at rates of 120, 40, 3, 150 and 6 ml/minute, respectively, to the centre nozzle, a mixture of argon and oxygen at rates of 800 and 200 ml/minute, respectively, to the first ring nozzle, hydrogen gas at a rate of 2000 ml/minute to the second ring nozzle, and oxygen gas at a rate of 5000 ml/minute to the third ring nozzle in the core-forming burner; and a mixture of silicon tetrachloride, boron trichloride, oxygen and trifluoromethane at rates of 50, 300, 300 and 12 ml/minute, respectively, to the center nozzle, a mixture of argon and oxygen at rates of 800 and 200 ml/minute, respectively, to the first ring nozzle, hydrogen gas at a rate of 2000 ml/minute to the second ring nozzle, and oxygen gas at a rate of 5000 ml/minute to the third ring nozzle in the cladding burner.

The sintered porous body of doped silicon dioxide obtained after 10 hours of running in the above described manner had a diameter of 65 mm and a length of 500 mm, which was melted by heating for 1 hour at 1450°C in an atmosphere of helium gas under atmospheric pressure to give a transparent synthetic quartz glass rod having a diameter of 30 mm and a length of 250 mm. Analysis of this quartz glass rod indicated substantial absence of hydroxy groups by the infrared absorption spectrometric analysis and about 80 p.p.m. of chlorine on an average by the X-ray microprobe analysis. Further, the distribution of the refractive index in a radical cross section was examined to find a graded-index type distribution well known in the art.

For comparison, the same experimental procedure as above was repeated for 5 hours excepting the omission of the trifluoromethane in each of the gaseous feeds to the core-forming and cladding burners to give a sintered porous body of doped silicon dioxide having a diameter of 65 mm and a length of 250 mm, which was heated and melted in the same manner as above to give a transparent synthetic quartz glass rod having a diameter of 30 mm and a length.of 125 mm. Analysis of this synthetic quartz glass rod indicated the impurity contents of 30 p.p.m. of hydroxy groups and 100 p.p.m. of chlorine atoms each on an average.

For further comparison, the sintered proous body of doped silicon dioxide prepared with omission of the trifluoromethane as above was subjected to the dehydration treatment by heating for 2 hours at 800°C in an atmosphere of helium gas containing thionyl chloride gas at a partial pressure of 10 mmHg followed by vitrification in the same manner as above. Analysis of the thus obtained comparative synthetic quartz glass rod indicated that the content of hydroxy groups had been decreased to 0.4 p.p.m. while the content of chlorine atoms was remarkably increased to 200 p.p.m. and 500 p.p.m. in the core and peripheral portions of the rod, respectively. When this synthetic quartz glass rod was used as a precursor of and spun into optical fibers, remarkable bubble formation was found therein, in particular, at the peripheral portions while no such an undesirable phenomenon of bubble formation was found in the optical fibers prepared from the quartz glass rods obtained by use of the trifluoromethane and those obtained without the use of trifluoromethane as well as the dehydration treatment of the sintered porous body indicating that the high content of chlorine atoms was mainly responsible to the phenomenon of bubble formation in optical fibers.

## 0 146 659

Examples 8 to 10

The experimental apparatus used in each of these Examples was substantially the same as in Example 7 except that the cladding burner in Examples 8 and 10 was not at a biased angle but directed horizontally to the lower end of the substrate rod or the sintered body of silicon dioxide growing thereon. The compound and feed rate of each component gas in the gaseous feed to each nozzle of the core-forming and cladding burners were as shown in Table 3 below.

The sintered porous body of silicon dioxide grown after 5 hours or 10 hours of running in each of the Examples had a diameter of 65 mm and a length of 250 mm or 500 mm, from which a transparent synthetic quartz glass rod of 30 mm diameter and 125 mm or 250 mm length was prepared by heating and melting in the same manner as in the preceding example. Each of the thus obtained synthetic quartz glass rods was substantially free from hydroxy groups but the quartz glass rod obtained in Example 8 contained about 70 p.p.m. of chlorine, the quartz glass rods obtained in Examples 9 and 10 being free from chlorine. The distribution of the refractive index within a radial cross section was examined for each of the synthetic quartz glass rods to find that the distribution was of the step-index type in the rods obtained in Examples 8 and 10 and of the graded-index type in the rod obtained in Example 9.

### TABLE 3

| | | | Example 8 | Example 9 | Example 10 |
|---|---|---|---|---|---|
| Silicon compound | | | $CH_3SiCl_3$ | $Si(OCH_3)_4$ | $CH_3Si(OCH_3)_3$ |
| Germanium dopant | | | $GeCl_4$ | $Ge(OCH_3)_4$ | $Ge(OC_2H_5)_4$ |
| Phosphorus dopant | | | $POCl_3$ | $PH_3$ | $PH_3$ |
| Fluorinated hydrocarbon compound | | | $CF_4$ | $CHF_3$ | $CHF_3$ |
| Feed rates to core forming burner, ml/minute | Center nozzle | Si compound | 120 | 120 | 120 |
| | | Ge dopant | 40 | 40 | 40 |
| | | P dopant | 3 | 2 | 2 |
| | | Argon | 250 | 300 | 300 |
| | | Oxygen | 200 | 1000 | 1300 |
| | | Fluorinated hydrocarbon | 5 | 6 | 6 |
| | First ring nozzle | Argon | 800 | 700 | 700 |
| | | Oxygen | 200 | 300 | 300 |
| | Second | Hydrogen | 1500 | 300 | 400 |
| | Third | Oxygen | 4500 | 600 | 800 |
| Feed rates to cladding burner, ml/minute | Center nozzle | Si compound | 50 | 50 | 50 |
| | | Argon | 150 | 100 | 100 |
| | | Oxygen | 200 | 300 | 330 |
| | | Fluorinated hydrocarbon | 2 | 2 | 2 |
| | First ring nozzle | Argon | 800 | 350 | 350 |
| | | Oxygen | 200 | 150 | 150 |
| | Second | Hydrogen | 1500 | 200 | 300 |
| | Third | Oxygen | 4500 | 400 | 600 |
| Growth time of sintered body, hours | | | 5 | 10 | 10 |

11

## Examples 11 and 12

The apparatus and the disposition of the core-forming and cladding burners in Examples 11 and 12 were the same as in Examples 9 and 8, respectively, and a gaseous feed indicated in Table 4 below was supplied to each of the nozzles of these burners whereby the silicon compound is burnt and silicon dioxide was deposited on the quartz glass substrate to form a sintered porous body of silicon dioxide over a length of 5 hours. A sintered porous body of silicon dioxide obtained in each of the Examples had a diameter of 60 mm and a length of 250 mm, from which a transparent synthetic quartz glass rod was prepared by heating and melting in the same manner as in the preceding example. Analysis of these rods for the contents of hydroxy groups and chlorine indicated that they were substantially free from these undesirable impurities. The distribution of the refractive index with in a radial cross section of these quartz glass rods was of the graded-index type of the step-index type in the rods obtained in Examples 11 and 12, respectively.

### TABLE 4

| | | | Example 11 | Example 12 |
|---|---|---|---|---|
| Silicon compound | | | $Si(OCH_3)_4$ | $CH_3Si(OCH_3)_3$ |
| Boron dopant | | | $B(OC_2H_5)_3$ | $B(OCH_3)_3$ |
| Fluorinated hydrocarbon compound | | | $CF_4$ | $CHF_3$ |
| Feed rates to core forming burner, ml/minute | Center nozzle | Si compound | 120 | 120 |
| | | Argon | 250 | 250 |
| | | Oxygen | 720 | 800 |
| | | Fluorinated hydrocarbon | 4 | 4 |
| | First ring nozzle | Argon | 700 | 700 |
| | | Oxygen | 300 | 300 |
| | Second | Hydrogen | 300 | 400 |
| | Third | Oxygen | 600 | 800 |
| Feed rates to cladding burner, ml/minute | Center nozzle | Si compound | 50 | 50 |
| | | B dopant | 300 | 300 |
| | | Argon | 800 | 800 |
| | | Oxygen | 3000 | 1700 |
| | | Fluorinated hydrocarbon | 10 | 12 |
| | First ring nozzle | Argon | 350 | 350 |
| | | Oxygen | 150 | 150 |
| | Second | Hydrogen | 200 | 300 |
| | Third | Oxygen | 400 | 600 |

### Example 13

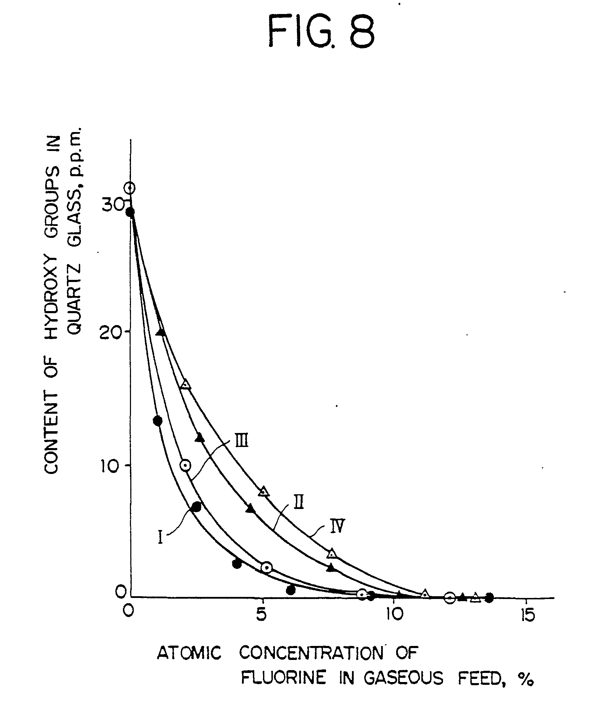

The same experimental procedure as in Example 7 or 9 was repeated by varying the amount of trifluoromethane or by replacing the trifluoromethane with varied amounts of carbon tetrafluoride relative to the silicon compound. The results of the analysis of the synthetic quartz glass rods for the content of the hydroxy groups are graphically shown in Figure 8 as a function of the atomic concentration of fluorine in % which is a value expressed by F/(F + Si + Ge + P + B) multiplied by 100. In Figure 8, the curves I and II

12

correspond to the experiments undertaken in the conditions of Example 7 with trifluoromethane and carbon tetrafluoride, respectively, and the curves III and IV correspond to the experiments undertaken in the conditions of Example 9 with trifluoromethane and carbon tetrafluoride, respectively.

## Example 14

The same experimental procedure as in Example 7 was repeated except that the trifluoromethane as the fluorinated hydrocarbon compound was replaced with trifluoro chloromethane, pentafluoro chloroethane or trifluoro bromomethane supplied to the core-forming and cladding burners in the feed rates indicated in Table 5 below for 5 hours. Each of the synthetic quartz glass rods prepared by heating and melting the sintered porous body of 65 mm diameter and 250 mm length and having a diameter of 30 mm and a length of 125 mm was substantially free from hydroxy groups but contained chlorine as an impurity in an amount shown in Table 5. The distribution of the refractive index within a radial cross section was of the graded-index type in each of the quartz glass rods.

## Example 15

The same experimental procedure as in Example 9 was repeated except that the trifluoromethane as the fluorinating agent was replaced with carbon tetrafluoride, hexafluoroethane or octafluoropropane supplied to the core-forming and cladding burners in the feed rates shown in Table 5 over a period of 5 hours. Each of the synthetic quartz glass rods prepared by heating and melting the sintered porous body of silicon dioxide of 65 mm diameter and 250 mm length and having a diameter of 30 mm and a length of 125 mm was substantially free from the impurities of hydroxy groups and chlorine. The distribution of the refractive index within a radial cross section of each of the rods was of the graded-index type.

## Example 16

A synthetic quartz tube having an outer diameter of 30 mm, inner diameter of 26 mm and length of 1000 mm was mounted on an apparatus (illustrated in Figure 5 and a gaseous mixture composed of methyl trichlorosilane as the silicon source carried by argon gas, germanium tetrachloride and phosphorous oxychloride as the dopants carries by oxygen gas and trifluorochloromethane as the fluorinated hydrocarbon compound carried by oxygen gas was injected into the quartz glass tube from a gas feed nozzle while the quartz glass tube under heating from outside by use of an oxyhydrogen burner was axially rotated and moved in the axial direction at a velocity of 150 mm/minute so that the silicon dioxide formed inside the tube was deposited on the inner wall of the tube in the zone under outer heating beginning with one end toward the other end of the tube and rapidly returning to the beginning end. This procedure was repeated 100 times to deposit 100 layers of silicon dioxide on the inner wall of the tube.

TABLE 5

| | | | Example 14 | | | Example 15 | | |
|---|---|---|---|---|---|---|---|---|
| | | Compound | $CCIF_3$ | $C_2CIF_5$ | $CBrF_3$ | $CF_4$ | $C_2F_6$ | $C_3F_8$ |
| Fluorinating agent | Feed rate to core-forming burner, ml/minute | | 6 | 4 | 6 | 5 | 4 | 3 |
| | Feed rate to cladding burner, ml/minute | | 12 | 8 | 12 | 2 | 1 | 1 |
| Atomic concentration of fluorine in gaseous feed, % | | | 9.5 | 10.5 | 9.5 | 11.7 | 12.4 | 13.1 |
| Content of chlorine in synthetic quartz glass, p.p.m. | | | 100 | 90 | 80 | 0 | 0 | 0 |

The feed rates of the gaseous components in the injection into the tube were such that the methyl trichlorosilane, phosphorous oxychloridè and trifluorochloromethane were supplied each at a constant rate of 100 ml/minute, 10 ml/minute and 5 ml/minute, respectively, while the feed rates of germainium tetrachloride and oxygen gas were gradually and uniformly increased from 0 to 50 ml/minute and from 250 to 310 ml/minute, respectively, during the above mentioned 100 cycles of the silicon dioxide deposition so that the deposited layers of the silicon dioxide were doped with increasing amounts of germanium dioxide from the first deposited layer to the last deposited layer.

After interruption of the gaseous feed into the tube, the quartz glass tube was collapsed by intensifying the outer heating to give a solid quartz glass rod to be used as a precursor of optical fibers. The distribution of refractive index with in a radial cross section of this rod was of the graded-index type. The results of the analysis by use of an X-ray microprobe analyzer indicated that the content of chlorine as an impurity was in the range from 100 to 200 p.p.m. within the cross section while the content of hydroxy groups was substantially zero as determined by the infrared absorption spectrometric analysis.

### Example 17

The apparatus and setting of the synthetic quartz glass tube as well as the procedure were the same as in the preceding example to deposit 100 layers of silicon dioxide doped with phosphorus as $P_2O_5$ and germanium as $GeO_2$. The gaseous feed injected into the tube was composed of 100 ml/minute of methyl trimethoxysilane as the silicon source, 0 to 50 ml/minute of tetraethoxygermane and 10 ml/minute of phosphine as the dopants, 4 ml/minute of carbon tetrafluoride as the fluorinated hydrocarbon compound and 800 to 1500 ml/minute of oxygen gas with argon gas as the carrier.

The quartz glass rod obtained by collapsing the above obtained quartz glass tube coated on the inner wall had a grade-index type distribution of refractive index within a radial cross section. The results by the X-ray microprobe analysis and infrared absorption spectrometric analysis undertaken with this quartz glass rod indicated substantial absence of chlorine and hydroxy impurities.

### Example 18

The apparatus and setting of the synthetic quartz glass tube as well as the procedure were the same as in the preceding example to deposit doped silicon dioxide layers on the inner wall of the tube. The gaseous feed until the deposition of 30 layers of boron-doped silicon dioxide was composed of 100 ml/minute of methyl trichlorosilane as the silicon source, 200 ml/minute of boron trichloride as the dopant, 3 ml/minute of pentafluoro chloroethane as the fluorinated hydrocarbon compound and 400 ml/minute of oxygen gas with argon as the carrier and then the gaseous feed was switched to a mixture composed of 100 ml/minute of methyl trichlorosilane, 10 ml/minute of phosphorous oxychloride, 30 ml/minute of germanium tetrachloride, 3 ml/minute of pentafluoro chloroethane and 270 ml/minute of oxygen gas with argon as the carrier and 70 layers of silicon dioxide doped with phosphorus and germanium were deposited in this manner as the core-forming layers on the boron-doped layers.

The quartz glass rod obtained by collapsing the above prepared quart glass tube coated on the inner wall with layers of doped silicon dioxide has a step-index type distribution of refractive index within a radial cross section. The analysis by use of an X-ray microprobe analyzer indicated that the content of chlorine impurity was in the range from 100 to 200 p.p.m. while substantially no hydroxy impurity could be detected by the infrared absorption spectrometric analysis.

### Example 19

The apparatus and setting of the synthetic quartz glass tube as well as the procedure were the same as in the preceding example to deposit doped silicon dioxide layers on the inner wall of the tube. The gaseous feed until the deposition of 30 layers of boron-doped silicon dioxide was composed of 100 ml/minute of methyl trimethoxysilane as the silicon source, 200 ml/minute of trimethyl borate as the dopant, 5 ml/minute of trifluoromethane as the fluorinated hydrocarbon compound and 1850 ml/minute of oxygen gas with argon as the carrier. Thereafter, the gaseous feed was switched to a mixture composed of 100 ml/minute of methyl trimethoxysilane, 10 ml/minute of phosphine, 30 ml/minute of tetraethoxygermane, 5 ml/minute of trifluoromethane and 1250 ml/minute of oxygen with argon as the carrier, of which 70 layers of silicon dioxide doped with phosphorus and germanium were deposited on the boron-doped silicon dioxide layer.

The quartz glass rod obtained by collapsing the above prepared quarz glass tube coated on the inner wall with layers of doped silicon dioxide had a step-index type distribution of refractive index within a radial cross section. The results of the X-ray microprobe analysis and infrared absorption spectrometric analysis indicated substantial absence of chlorine and hydroxy impurities, respectively, in the quartz glass rod. When the quartz glass rod was spun into optical fibers, the phenomenon of bubble formation did not take place and the optical fibers thus obtained indicated no adsorption loss of light due to the presence of chlorine impurity.

### Example 20

The apparatus and setting of the synthetic quartz glass tube as well as the procedure for the deposition of doped silicon dioxide on the inner wall of the tube were the same as in the preceding example. The gaseous feed until the deposition of 50 layers of boron-doped silicon dioxide was composed of 100 ml/

15

minute of tetramethoxysilane as the silicon source, 200 ml/minute of triethyl borate as the dopant, 3 ml/minute of hexafluoroethane as the fluorinated hydrocarbon compound and 2900 ml/minute of oxygen gas with argon as the carrier. Thereafter, the gaseous feed was switched to a mixture composed of 100 ml/minute of tetramethoxysilane, 10 ml/minute of phosphine, 35 ml/minute of tetramethoxygermane, 3 ml/minute of hexafluoroethane and 1000 ml/minute of oxygen gas with argon as the carrier and 50 more layers of silicon dioxide doped with phosphorus and germanium were deposited on the previously deposited layers of boron-doped silicon dioxide.

The quartz glass rod obtained by collapsing the above prepared quartz glass tube coated on the inner wall with layers of doped silicon dioxide had a step-index type distribution of refractive index within a radial cross section. The results of the X-ray microprobe analysis and infrared absorption spectrometric analysis indicated substantial absence of chlorine and hydroxy impurities, respectively, in the quartz glass rod. When the quartz glass rod was spun into optical fibers, the phenomenon of bubble formation did not take place and the optical fibers thus obtained indicated no absorption loss of light due to the presence of chlorine impurity.

**Claims**

1. A method for the preparation of a synthetic quartz glass body substantially free from hydroxy groups by vapor phase oxidative decomposition of a silicon compound, which comprises the steps of:

a) subjecting a gaseous mixture composed of a silicon compound and a fluorine-containing hydrocarbon compound to a combustion in an oxidizing condition to form silicon dioxide which is deposited on the surface of a refractory substrate in the form of a porous sintered body; and,

b) vitrifying the porous sintered body of silicon dioxide into a transparent quartz glass body,
characterized in that the fluorine-containing hydrocarbon compound is represented by the general formula $C_aH_bF_cX_d$ in which X is a halogen atom other than fluorine, the suffix a is a positive integer of 1, 2 or 3, the suffix b is zero or a positive integer not larger than 7, the suffix c is a positive integer not larger than 8, and the suffix d is zero or a positive integer not larger than 7, with the proviso that $2a + 2 = b + c + d$, said fluorine-containing hydrocarbon compound being used in an amount which is sufficient to completely remove the hydroxy group in the resultant silicon dioxide and which does not significantly decrease the refractive index of the quartz glass, even in the presence of a small amount of fluorine as impurity.

2. A method as claimed in claim 1, characterized in that the amount of the fluorine-containing hydrocarbon compound is sufficient to give from 0.01 to 10% by moles of fluorine atoms based on the silicon atoms in the silicon compound.

3. A method as claimed in claims 1 or 2, characterized in that the silicon compound is represented by the general formula $R_nSiX^1_{4-n}$, in which R is a hydrogen atom or a monovalent hydrocarbon group, $X^1$ is a halogen atom or an alkoxy group, and n is zero or a positive integer not larger than 4.

4. A method as claimed in claims 1 to 3, characterized in that the fluorine-containing hydrocarbon compound is selected from the class consisting of carbon tetrafluoride, trifluoromethane, trifluoro chloromethane, trifluoro bromomethane, pentafluoro chloroethane, hexafluoroethane and octafluoropropane.

5. A method for the preparation of a precursor rod of optical fibers made from a synthetic quartz glass body substantially free from hydroxy groups, which comprises the step of subjecting a gaseous mixture composed of a silicon compound, a fluorine-containing hydrocarbon compound and at least one dopant, to a combustion in an oxidizing condition to form a silicon dioxide doped with said dopant compound, characterized in that:

the fluorine-containing hydrocarbon compound is represented by the general formula $C_aH_bF_cX_d$ in which X is a halogen atom other than fluorine, the suffix a is a positive integer of 1, 2 or 3, the suffix b is zero or a positive integer not larger than 7, the suffix c is a positive integer not larger than 8, and the suffix d is zero or a positive integer not larger than 7, with the proviso that $2a + 2 = b + c + d$;

said dopant compound is selected from the class consisting of germanium compounds, represented by the general formula $GeY_4$, in which Y is a halogen atom or an alkoxy group, boron compounds, represented by the general formula $BY_3$, in which Y has the same meaning as defined above, phosphorus oxychloride and phosphine;

said fluorine-containing hydrocarbon compound is used in an amount which is sufficient to completely remove the hydroxy groups in the resultant silicon dioxide, and which does not significantly decrease the refractive index of the quartz, even in the presence of a small amount of fluorine as impurity;

said doped silicon dioxide is deposited on the surface of a refractory substrate in the form of a porous sintered body;

the combustion step is continued to grow the porous sintered body of silicon dioxide until an elongated rod-like body is obtained; and,

said elongated rod-like body is vitrified into a transparent quartz glass body by heating at a temperature higher than the melting point of silicon dioxide.

6. A method for the preparation of a precursor rod of a synthetic quartz glass for optical fibers having a graded-index type or step-index type distribution of the refractive index within a radial cross section and being substantially free from hydroxy groups, which comprises the steps of blowing a gaseous mixture composed of a silicon compound, a fluorine-containing hydrocarbon compound and a dopant compound into a quartz glass tube and subjecting said gaseous mixture to combustion or oxidative decomposition, characterozed in that:

said fluorine-containing hydrocarbon compound is represented by the general formula $C_aH_bF_cX_d$ in which X is a halogen atom other than fluorine, the suffix a is a positive integer of 1, 2 or 3, the suffix b is zero or a positive integer not larger than 7, the suffix c is a positive integer not larger than 8, and the suffix d is zero or a positive integer not larger than 7, with the proviso that $2a + 2 = b + c + d$;

said fluorine-containing hydrocarbon compound is used in an amount which is sufficient to completely remove the hydroxy groups in the resultant silicon dioxide, and which does not significantly decrease the refractive index of the quartz, even in he presence of a small amount of fluorine as impurity;

said combustion or oxidative decomposition is performed in the space surrounded by the quartz glass tube to form silicon dioxide doped with said dopant compound which is deposited on the inner wall of the quartz glass tube in the form of transparent quartz glass layers; and,

the thus obtained quartz glass tube is collapsed into a solid rod by heating at a temperature higher than the melting point of silicon dioxide.

7. A method as claimed in claim 6, characterized in that the silicon compound is represented by the general formula $R_nSiX^1_{4-n}$, in which R is a hydrogen atom or a monovalent hydrocarbon group, $X^1$ is a halogen atom or an alkoxy group, and n is zero or a positive integer not larger than 4.

8. A method as claimed in claims 6 or 7, characterized in that the fluorine-containing hydrocarbon compound is selected from the class consisting of carbon tetrafluoride, trifluoromethane, trifluoro chloromethane, trifluoro bromomethane, pentafluoro chloroethane, hexafluoroethane, and octafluoropropane.

9. A method as claimed in claims 6 to 8, characterized in that the dopant compound is selected from the class consisting of germanium compounds represented by the general formula $GeX^1_4$, in which $X^1$ is a halogen atom or an alkoxy group, boron compounds, represented by the general formula $BX^1_3$, in which $X^1$ has the same meaning as defined above, phosphorus oxychloride and phosphine.

10. A method as claimed in claims 6 to 9, characterized in that the amount of the fluorine-containing hydrocarbon compound is sufficient to give from 0.01 to 10% by moles of fluorine atoms, based on the silicon atoms in the silicon compound.

## Patentansprüche

1. Verfahren zur Herstellung eines synthetischen Quarzglaskörpers, weitgehend frei von Hydroxygruppen, durch oxidative Dampfphasenpyrolyse einer Siliciumverbindung, in dem

a) in Gasgemisch aus einer Siliciumverbindung und einem Fluorkohlenwasserstoff unter oxidativen Reaktionsbedingungen pyrolysiert wird zu Siliciumdioxid, das sich auf der Oberfläche eines feuerfesten Substrats als poröser Sinterkörper niederschlägt; und

b) dieser poröse $SiO_2$-Sinterkörper zu einem durchsichtigen Quarzglaskörper verglast wird,
dadurch gekennzeichnet, daß der Fluorkohlenwasserstoff repräsentiert wird durch die allgemeine Formel $C_aH_bF_cX_d$, wobei C ein von Fluor verschiedenes Halogenatom darstellt, a = 1,2,3; $0 \leq b \leq 7$, $1 \leq c \leq 8$; sowie $0 \leq d \leq 7$; mit der Bedingung, daß $2a + 2 = b + c + d$; wobei a,b,c,d jeweils ganze Zahlen sind; und daß der besagte Fluorkohlenwasserstoff in einer Menge eingesetzt wird, die ausreicht, alle Hydroxygruppen im erhaltenen Siliciumdioxid zu beseitigen, ohne merklich den Brechungsindex des Quarzglases, selbst in Gegenwart eines kleinen Anteils an Fluor als Verunreinigung, zu vermindern.

2. Verfahren nach Anspruch 1, dadurch gekennzeichnet, daß die Menge an Fluorkohlenwasserstoff aureicht, um 0,01—10 Mol-% Fluoratome, bezogen auf die Siliciumatome in der Siliciumverbindung, zu liefern.

3. Verfahren nach Anspruch 1 oder 2, dadurch gekennzeichnet, daß die Siliciumverbindung repräsentiert wird durch die allgemeine Formel $R_nSiX^1_{4-n}$, wobei R Wasserstoff oder ein einwertiger Kohlenwasserstoff-Rest, $X^1$ ein Halogenatom oder eine Alkoxygruppe und $0 \leq n \leq 4$ ist, wobei n eine ganze Zahl ist.

4. Verfahren nach einem der Ansprüche 1 bis 3, dadurch gekennzeichnet, daß der Fluorkohlenwasserstoff ausgewählt wird aus der aus Tetrafluormethan, Trifluormethan, Trifluorchlormethan, Trifluorbrommethan, Pentafluorchlorethan, Hexafluorethan und Octafluorpropan bestehenden Verbindungsklasse.

5. Verfahren zur Herstellung eines als Ausgangsmaterial für optische Fasern geeigneten Stabes aus einem synthetischen Quarzglaskörper, weitgehend frei von Hydroxygruppen, in dem ein Gasgemisch aus einer Siliciumverbindung, einem Fluorkohlenwasserstoff und aus mindestens einem Dotierstoff unter oxidativen Reaktionsbedingungen zu einem diesen Dotierstoff enthaltenden Siliciumdioxid pyrolysisert wird, dadurch gekennzeichnet,

daß der Fluorkohlenwasserstoff repräsentiert wird durch die allgemeine Formel $C_aH_bF_cX_d$, wobei X ein von Fluor verschiedenes Halogenatom darstellt, a = 1,2,3; $0 \leq b \leq 7$; $1 \leq c \leq 8$; sowie $0 \leq d \leq 7$; mit der Bedingung, daß $2a + 2 = b + c + d$; wobei a,b,c,d jeweils ganze Zahlen sind; daß basagter Dotierstoff eine Germaniumverbindung der allgemeinen Formel $GeY_4$, wobei Y ein Halogenatom oder eine Alkoxygruppe verkörpert, oder eine Borverbindung der allgemeinen Formel $BY_3$, wobei Y dieselbe Bedeutung wie voranstehend besitzt, oder Phosphotoxidtrichlorid oder Phosphan ist;

daß der besagte Fluorkohlenwasserstoff in einer Menge eingesetzt wird, die ausreicht, alle Hydroxygruppen im erhaltenen Siliciumdioxid zu beseitigen, ohne merklich den Brechungsindex des Quarzglases, selbst in Gegenwart eines kleinen Anteils an Fluor als Verunreinigung, zu Vermindern;

daß das besagte dotierte Siliciumdioxid auf der Oberfläche eines feuerfesten Substrats in Form eines porösen Sinterkörpers abgeschieden wird;

daß der Pyrolyse so lange fortgesetzt wird, bis der poröse $SiO_2$-Sinterkörper zu einem länglichen, stabförmigen Körper herangewachsen ist; und

daß besagter länglicher, stabförmiger Körper zu einem durchsichtigen Quarzglaskörper verglast wird durch Erhitzen auf eine Temperatur, die über dem Schmelzpunkt von $SiO_2$ liegt.

6. Verfahren zur Herstellung eines stabförmigen Ausgangsmaterials für synthetisches, für Gradientenfasern oder Kern-Mantel-Fasern geeignetes Quarzglas, weitgehend frei von Hydroxygruppen, in dem ein Gasgemisch aus einer Siliciumverbindung, aus einem Fluorkohlenwasserstoff und einem Dotierstoff in ein Quarzglasrohr eingeleitet und pyrolysiert oder oxidativ zersetzt wird, dadurch gekennzeichnet,

daß der Fluorkohlenwasserstoff repräsentiert wird durch die allgemeine Formel $C_aH_bF_cX_d$, wobei X ein von Fluor verschiedenes Halogenatom darstellt, a = 1,2,3; $0 \leq b \leq 7$; $1 \leq c \leq 8$; sowie $0 \leq d \leq 7$; mit der Bedingung, daß $2a + 2 = b + c + d$; wobei a,b,c,d jeweils ganze Zahlen sind;

daß der besagte Fluorkohlenwasserstoff in einer Menge eingesetzt wird, die ausreicht, alle Hydroxygruppen in erhaltenen Siliciumdioxid zu beseitigen, ohne merklich den Brchungsindex des Quarzglases, selbst in Gegenwart eines kleinen Anteils an fluor als Verunreinigung, zu vermindern;

daß besagte Pyrolyse oder oxidative Zersetzung im durch das Quarzglasrohr eingeschlossenen Raum durchgeführt wird zu einem mit dem besagten Dotierstoff versetzten $SiO_2$, das auf der Innenwand des Quarzglasrohrs in Form einer durchsichtigen Quarzglasschicht abgeschieden wird; und daß das so erhaltene Quarzglasrohr zu einem massiven Stab bei einer Temperatur, die über dem Schmelzpunkt von $SiO_2$ liegt, geschmolzen wird.

7. Verfahren nach Anspruch 6, dadurch gekennzeichnet, daß die Siliciumverbindung repräsentiert wird durch die allgemeine Formel $R_nSiX^1_{4-n}$, wobei R Wasserstoff oder ein einwertiger Kohlenwasserstoff-Rest, $X^1$ ein Halogenatom oder eine Alkoxygruppe und $0 \leq n \leq 4$ ist, wobei n eine ganze Zahl ist.

8. Verfahren nach Anspruch 6 oder 7, dadruch gekennzeichnet, daß der Fluorkohlenwasserstoff ausgewählt wird aus der Verbindungsklasse, bestehend aus Tetrafluormethan, Trifluormethan, Trifluorchlormethan, Trifluorbrommethan, Pentafluorchlorethan, Hexafluorethan und Octafluorpropan.

9. Verfahren nach einem der Ansprüche 6 bis 8, dadurch gekennzeichnet, daß besagter Dotierstoff eine Germaniumverbindung der allgemeinen Formel $GeX^14$, wobei $X^1$ ein Halogenatom oder eine Alkoxygruppe verkörpert, oder eine Bor verbindung der allgemeinen Formel $BX^1_3$, wobei $X^1$ dieselbe Bedeutung wie voranstehend besizt, oder Phosphoroxidtrichlorid oder Phosphan ist.

10. Verfahren nach einem der Ansprüche 6 bis 9, dadurch gekennzeichnet, daß die Menge an Fluorkohlenwasserstoff ausreicht, um 0,01 bis 10 Mol-% Fluoratome, bezogen auf die Siliciumatome in der Siliciumverbindung, zuliefern.

**Revendications**

1. Procédé pour la préparation d'un corps en verre de quartz synthétique pratiquement exempt de groupes hydroxyle, par décomposition avec oxydation en phase vapeur d'un composé de silicium, qui comprend les étapes consistant:

a) à soumettre un mélange gazeux formé d'un composé de silicium et d'un composé hydrocarbure fluoré à une combustion dans un état oxydant pour former du dioxyde de silicium qui se dépose sur la surface d'un substrat réfractaire sous la forme d'un corps fritte poreux; et

b) à vitrifier le corps fritté poreux de dioxyde de silicium en un corps de quartz transparent, caractérisé par le fait que le composé hydrocarbure fluoré est représente par la formule générale $C_aH_bF_cX_d$ dans laquelle X est un atome d'halogène autre que le fluor, l'indice a est un nombre entier positif valent 1, 2 ou 3, l'indice b est zéro ou un nombre entier positif non supérieur à 7, l'indice c est un nombre entier positif non supérieur 8 et l'indice d est zéro ou un nombre entier positif non supérieur à 7, étant entendu que $2a + 2 = b + c + d$, le composé hydrocarbure fluoré étant utilisé en une quantité qui est suffisante pour éliminer complètement les groupes hydroxyle dans le dioxyde de silicium obtenu et qui ne diminue pas notablement l'indice de réfraction du verre de quartz, même en présence d'une petite quantité de fluor comme impureté.

2. Procédé selon la revendication 1, caractérisé par le fait que la quantité du composé hydrocarbure fluoré est suffisante pour donner de 0,01 à 10% en moles d'atomes de fluor sur la base des atomes de silicium dans le composé de silicium.

3. Procédé selon l'une des revendications 1 et 2, caractérisé par le fait que le composé de silicium est représenté par la formule générale $R_nSiX^1_{4-n}$ dans laquelle R est un atome d'hydrogène ou un groupe hydrocarbure monovalent, $X^1$ est un atome d'halogène ou un groupe alcoxyle et n est zéro ou un nombre entier positif non supérieur à 4.

4. Procédé selon les revendications 1 à 3, caractérisé par le fait que le composé hydrocarbure fluoré est choisi dans la classe formée du tétrafluorure de carbone, du trifluorométhane, du trifluorochlorométhane, du trifluorobromométhane, du pentafluorochloréthane, de l'hexafluoréthane et de l'octafluoropropane.

**0 146 659**

5. Procédé pour la préparation d'une tige progénitrice de fibres optiques faite d'un corps en verre de quartz synthétique pratiquemment exempt de groupes hydroxyle, qui comprend l'étape consistant à soumettre du mélange gazeux formé d'un composé de silicium, d'un composé hydrocarbure fluoré et d'au moins un dopant à une combustion dans un état oxydant pour former un dioxyde de silicium dopé par le composé dopant, caractérisé par le fait:

que le composé hydrocarbure fluoré est représenté par la formule générale $C_aH_bF_cX_d$ dans laquelle X est un atome d'halogène autre que la fluor, l'indice a est un nombre entier positif valent 1, 2 ou 3, l'indice b est zéro ou un nombre entier positif non supérieur à 7, l'indice c est un nombre entier positif non supérieur à 8 et l'indice d est zéro ou un nombre entier positif non supérieur à 7, étant entendu que $2a + 2 = b + c + d$;

que le composé dopant est choisi dans la classe formée des composés de germanium représentés par la formule générale $GeY_4$ dans laquelle Y est un atome d'halogène ou un groupe alcoxyle, des composés de bore représentés par la formule générale $BY_3$ dans laquelle Y a la même signification qui est définie ci-dessus, de l'oxychrorure de phosphore et de la phosphine;

que l'on utilise le composé hydrocarbure fluoré en une quantité qui est suffisante pour éliminer complètement les groupes hydroxyle dans le dioxyde de silicium obtenu, et qui ne diminue pas notablement l'indice de réfraction du quartz, même en présence d'une petite quantité de fluor comme impureté;

que l'on dépose le dioxyde de silicium dopé sur la surface d'un substrat réfractaire sous la forme d'un corps fritté poreux;

que l'on continue l'étape de combustion pour développer le corps fritté poreux de dioxyde de silicium jusqu'à ce qu'on obtienne un corps allongé similaire à une tige; et

que l'on vitrifie le corps allongé similaire à un tige en un corps en quartz transparent par chauffage à une température supérieure au point de fusion du dioxyde de silicium.

6. Procédé pour la préparation d'une tige progénitrice en verre de quartz synthétique pour fibres optiques ayant une distribution de l'indice de réfraction du type à indice dégradé ou du type à indice par paliers au sein d'une section radiale et étant pratiquemment exempte de groupes hydroxyle, qui comprend les étapes consistant à insuffler dans un tube de verre de quartz un mélange gazeux formé d'un composé de silicium, d'un composé hydrocarbure fluoré et d'un composé dopant et à soumettre ce mélange gazeux à la combustion ou à la décomposition avec oxydation, caractérisé par le fait:

que le composé hydrocarbure fluoré est représenté par la formule générale $C_aH_bF_cX_d$ dans laquelle X est un atome d'halogène autre que la fluor, l'indice a est un nombre entier positif valent 1, 2 ou 3, l'indice b est zéro ou un nombre entier positif non supérieur à 7, l'indice c est un nombre entier positif non supérieur à 8 et l'indice d est zéro ou un nombre entier positif non supérieur à 7, étant entendu que $2a + 2 = b + c + d$;

que l'on utilise le composé hydrocarbure fluoré en une quantité qui est suffisante pour éliminer complètement les groupes hydroxyle dans le dioxyde de silicium obtenu, et qui ne diminue pas notablement l'indice de réfraction du quartz, même en présence d'une petite quantité de fluor comme impureté;

que l'on effectue la combustion ou la décomposition avec oxydation dans l'espace entouré par le tube de verre de quartz pour former du dioxyde de silicium dopé par le composé dopant, qui se dépose sur la paroi intérieure du tube en verre de quartz sous la forme de couches transparentes de verre de quartz; et

que l'on écrase le tube de verre de quartz ainsi obtenu en une tige massive par chauffage à une température plus élevée que le point de fusion du dioxyde de silicium.

7. Procédé selon la revendication 6, caractérisé par le fait qui le composé de silicium est représenté par la formule générale $R_nSiX^1_{4-n}$ dans laquelle R est un atome d'hydrogène ou un groupe hydrocarbure monovalent, $X^1$ est un atome d'halogène ou un groupe alcoxyle et n est zéro ou un nombre entier positif non supérieur à 4.

8. Procédé selon l'une des revendications 6 et 7, caractérisé par le fait que le composé hydrocarbure fluoré est choisi dans la classe formée du tétrafluore de carbone, du trifluorméthane, du trifluorochlorométhane, du trifluorobromomethane, du pentafluorochloréthane, de l'hexafluoréthane et de l'octafluoropropane.

9. Procédé selon les revendications 6 à 8, caractérisé par le fait que le composé dopant est choisi dans la classe formée des composés de germanium représentés par la formule générale $GeX^1_4$ dans laquelle $X^1$ est un atome d'halogène ou un groupe alcoxyle, des composés de bore représentés par la formule générale $BX^1_3$ dans laquelle $X^1$ a la même signification qui est définie ci-dessus, de l'oxychlorure de phosphore et de la phosphine.

10. Procédé selon l'une quelconque des revendications 6 à 9, caractérisé en ce que la quantité de composé hydrocarbure fluoré est suffisante pour donner de 0,01 à 10% en moles d'atomes de fluor sur la base des atomes de silicium dans le composé de silicium.

19

# FIG.1

$n_1$ $n_2n_4n_3$

# FIG.2

$m_1$ $m_2$ $m_3m_4$

# FIG.3

8  9  10  7  6  1  2  3  4  5

# FIG. 4

8

9

7

10

2

1

3  4

5

6

# FIG. 5

16

11

12

13

14

15

17

19

18

20

# FIG. 6a

# FIG. 6b

WAVELENGTH, μm

WAVE NUMBER, cm⁻¹

WAVELENGTH, μm

WAVE NUMBER, cm⁻¹

# FIG. 7

Y-axis: CONTENT OF HYDROXY GROUPS IN QUARTZ GLASS p.p.m. (150, 100, 50, 20, 10, 0)

X-axis: ATOMIC CONCENTRATION OF FLUORINE IN GASEOUS FEED, % (0, 5, 10, 15)

Combination of silicon compound and fluorinating agent in curves I to IV

|  | $CF_4$ | $CHF_3$ |
|---|---|---|
| $CH_3Si(OCH_3)_3$ | I | III |
| $SiCl_4$ | II | IV |

4

# FIG. 8